# EUROPÄISCHE PATENTANMELDUNG

(11) **EP 4 534 283 A1**
(43) Veröffentlichungstag der Anmeldung: **09.04.2025**
(21) Anmeldenummer: 23201437.3
(22) Anmeldetag: 03.10.2023
(51) Int. Cl.: B32B 5/18, B32B 27/06, B32B 27/08, B32B 27/32

(54) **SCHALUNGSPLATTE MIT REDUZIERTER WÄRMEAUSDEHNUNG UND VERBESSERTER QUELLBESTÄNDIGKEIT**

(71) Anmelder: DOKA GmbH, 3300 Amstetten (AT)
(72) Erfinder: HEILMANN, Christoph, Pabneukirchen (AT); STRANNER, Jürgen, Eisentratten (AT); HANSEN, Sven André, Radebeul (DE)
(74) Vertreter: SONN Patentanwälte GmbH & Co KG

(57) **Zusammenfassung**

Die Erfindung betrifft eine Schalungsplatte (3) zur Herstellung von Beton- und Stahlbetontragwerken, aufweisend einen Schaumkern (A) umfassend ein Polyolefin, beidseitig mit dem Schaumkern (A) verbundene Tragschichten (B) umfassend jeweils ein faserverstärktes, thermoplastisches Laminat, und mit den Tragschichten (B) verbundene Außenschichten (C) umfassend jeweils ein faserverstärktes Polyolefin. Die Erfindung betrifft weiters ein Rahmenschalungselement (1), aufweisend einen Rahmen (2) und eine Schalungsplatte (3) gemäß der Erfindung.

## Beschreibung

Die vorliegende Erfindung betrifft eine Schalungsplatte und ein Rahmenschalungselement mit einer solchen Schalungsplatte.

Schalungsplatten werden im Betonbau als Negativform einer späteren Betonoberfläche verwendet.

Weiters wird in der WO 97/12756 A1 eine Sandwichplatte aus einer geschäumten, thermoplastischen Kernschicht, die beidseitig mit glasfasermattenverstärkten, thermoplastischen Außenschichten verbunden ist, offenbart. Das Material der Kernschicht und der Außenschichten kann Polypropylen sein.

In der WO 2020/094671 A1 wird eine Verbundplatte offenbart, die eine Kernschicht und damit verbundene Deckschichten aufweist. Die Kernschicht umfasst ein poröses Verstärkungsfaser-Thermoplastmaterial. Die Decklagen sind aus einem Verstärkungsfasergelege oder -gewebe gefertigt, das mit einem Thermoplast imprägniert ist.

Die WO 2018/185090 A1 betrifft ein Verbundbauteil mit einer zwischen zwei Deckschichten angeordneten Kernschicht. Zumindest eine Deckschicht umfasst eine Faservliesstoffschicht aus 10 bis 100 Gew% Thermoplastfasern und 0 bis 90 Gew% Verstärkungsfasern. Die Kernschicht weist eine Wirrfaservliesstoffschicht auf, die aus Verstärkungsfasern und Thermoplastfasern gebildet ist. Beschrieben wird die Verwendung des Verbundbauteils als Trennwand oder Schalungselement im Bauwesen oder im Möbelbau als Ersatz für Spanplatten.

Die WO 2009/046470 A1 betrifft eine Verbundplatte zur Verwendung im Baubereich, die eine geschäumte Kernschicht aus Kunststoff aufweist, die beidseitig mit Verbundschichten verbunden ist. Jede der Verbundschichten kann eine Verstärkungsschicht und eine Deckschicht aufweisen. Die Kernschicht kann einen bei 120 bis 250 °C verarbeitbaren Thermoplast umfassen, z.B. Polypropylen. Die Verstärkungsschichten können aus Stahlblechen bzw. Stahlgittern, Aluminiumblechen bzw. Aluminiumgittern, Glasfasern oder Glasgelegen bestehen, während die Deckschichten aus Thermoplasten, Duroplasten oder Kunststoffbändchengeweben bestehen können.

In der WO 97/49877 A1 wird ein mehrschichtiges Bauelement beschrieben, das eine Kernschicht aus Kunststoff aufweist, die beidseitig mit Tragschichten aus einem Leichtmetall begrenzt ist. Die Tragschichten sind mit Außenschichten verbunden. Die Kernschicht kann recycliertes, geschäumtes Polypropylen und Füllstoffe (z.B. Talkum und/oder Glasfasern) zur Festigkeitserhöhung aufweisen. Die Außenschicht kann aus einem mit 20 bis 40% Glasfasern gefüllten Kunststoff (z.B. Polyamid und/oder Polypropylen) bestehen.

Schalungsplatten werden zumeist in einen metallischen Rahmen eingelegt, um die Steifigkeit zu erhöhen und/oder um die Schalungsplatte mit benachbarten Schalungsplatten bzw. Bauwerksabschnitten verbinden zu können.

Da im Stand der Technik bekannte Schalungsplatten eine deutlich höhere Wärmeausdehnung haben als der Rahmen, werden häufig Silikonfugen zwischen der Schalungsplatte und dem Rahmen vorgesehen, um diese Wärmeausdehnungsunterschiede auszugleichen. Beim Einsatz kann jedoch Silikon aus den Fugen gedrückt werden, und Beton kann in die dadurch entstehende Lücke fließen, was zu Abplatzungen führen kann.

Die Schalungsplatte der EP 1 426 525 A1 umfasst eine Kernschicht, die Holzbestandteile aufweist und ein- oder beidseitig mit einer Schicht aus holzmehlgefülltem Polypropylen verbunden ist. Diese Schalungsplatte weist aufgrund ihres Holzanteils eine reduzierte Wärmeausdehnung auf, sodass die Menge an für Dehnfugen benötigtem Silikon verringert werden kann. Da Holz jedoch durch Wasseraufnahme quillt, kann sich dies nachteilig auf die Oberflächenqualität des Betons auswirken.

Es besteht ein Bedarf an einer Schalungsplatte, die sowohl eine gute thermische Dimensionsstabilität als auch eine gute Quellbeständigkeit aufweist. Eine Aufgabe der Erfindung ist es, eine solche Schalungsplatte zur Verfügung zu stellen.

Diese Aufgabe wird durch eine Schalungsplatte gemäß Anspruch 1 gelöst.

Die Erfindung kombiniert die beim Stand der Technik nur einzeln erzielten Vorteile (thermische Dimensionsstabilität, verschleißfeste Oberfläche, gute Nagelbarkeit, gute Quellbeständigkeit) und verwirklicht sie in einer einzigen Schalungsplatte. Die Tragschichten stellen eine hohe Stabilität und Festigkeit bereit - dadurch gelingt es, anstelle eines Holzkerns einen Schaumkern umfassend ein Polyolefin vorzusehen, und dennoch gute mechanische Eigenschaften, die für die bestimmungsgemäße Verwendung der Schalungsplatte notwendig sind, beizubehalten. Die Schalungsplatte weist daher eine gute Quellbeständigkeit bei Feuchtigkeitsaufnahme auf, was zu einem verbesserten Betonbild führt. Auch die Frage einer möglichen Verrottung von Holz in der Schalungsplatte und einer damit einhergehenden Verringerung ihrer Lebensdauer stellt sich nicht, insbesondere, wenn die Schalungsplatte gänzlich holzfrei ist.

Überraschenderweise lässt sich durch die erfindungsgemäßen Tragschichten auch die Wärmeausdehnung der Schalungsplatte signifikant reduzieren, sodass aufgrund der daraus resultierenden geringeren Wärmeausdehnungsdifferenz der Schalungsplatte und eines Rahmens, in den die Schalungsplatte eingesetzt wird, nur vergleichsweise schmale bzw. gar keine Silikonfugen vorgesehen werden brauchen, um die Wärmeausdehnungsdifferenz zu kompensieren. Somit können glatte, homogene Betonoberflächen hergestellt werden.

Weiters weist die Schalungsplatte verschleißfeste Außenschichten und eine gute Nagelbarkeit auf. Unter der Nagelbarkeit wird dabei die Eigenschaft der Schalungsplatte verstanden, dass das Einschlagen bzw. Durchschlagen sowie das Entfernen von Nägeln keine signifikanten Öffnungen, Vertiefungen, Risse und/oder Abplatzungen in der Schalungsplatte hinterlässt.

Die vorteilhafte Kombination der Eigenschaften der erfindungsgemäßen Schalungsplatte tritt besonders gut zutage, wenn der Schaumkern, die Tragschichten und die Außenschichten klebstofffrei und insbesondere vollflächig miteinander verbunden sind, da hierdurch die mechanische Belastbarkeit der Schalungsplatte signifikant verbessert werden kann. Das Vorsehen einer klebstofffreien Verbindung ist hingegen bei aus dem Stand der Technik bekannten Schalungsplatten, die metallische Schichten und/oder Holzschichten enthalten, zumindest ohne Einbußen der Verbundfestigkeit nicht möglich. Die erfindungsgemäße Schalungsplatte kann am Ende ihrer Lebensdauer zerkleinert und in den Produktionsprozess rückgeführt werden. Die Schalungsplatte ist somit vollständig kreislauffähig, was erheblich zur Lösung des Entsorgungsproblems auf Baustellen und bei Schalungsherstellern beitragen kann.

Die Schalungsplatte weist vorzugsweise eine Dicke von 10 bis 35 mm auf, bevorzugter 12 bis 30 mm, noch bevorzugter 15 bis 25 mm. Der Schaumkern weist vorzugsweise 60 bis 95% der Dicke der Schalungsplatte auf, bevorzugter 70 bis 90%, noch bevorzugter 75 bis 85%. Dann kann eine gute Scherfestigkeit erreicht werden. Die Tragschichten weisen vorzugsweise jeweils 2 bis 8% der Dicke des Schalungsplatte auf, bevorzugter 3 bis 8%, noch bevorzugter 4 bis 7%. Hiermit können eine hohe Zugfestigkeit und eine reduzierte Wärmeausdehnung erzielt werden. Die Außenschichten weisen vorzugsweise jeweils 2 bis 8% der Dicke der Schalungsplatte auf, bevorzugter 2 bis 6%, noch bevorzugter 3,5 bis 5,5%. Hieraus kann eine besonders gut nagelbare Schalungsplatte resultieren, sodass eine glatte Betonoberfläche hergestellt werden kann.

Der Schaumkern und die Tragschichten, und/oder die Tragschichten und die Außenschichten sind vorzugsweise klebstofffrei miteinander verbunden. Hierdurch kann ein insbesondere bei lange anhaltenden Belastungen auftretendes Kriechen von Klebstoffverbindungen vermieden werden. Mit Klebstoffen sind in diesem Zusammenhang jegliche Materialien gemeint, die zur Verbesserung der Adhäsion zweier Schichten dienen können, z.B. Dispersionsklebstoffe, Schmelzklebstoffe und Haftvermittler (Primer). Vorzugsweise grenzen die Tragschichten direkt an den Schaumkern an, und/oder die Außenschichten grenzen direkt an die Tragschichten an. Durch eine solche direkte (d.h. unmittelbare) Verbindung der Schichten, ohne dass zusätzliche Zwischenschichten vorgesehen werden, kann die Recyclingfähigkeit der Schalungsplatte verbessert werden. Besonders bevorzugt ist der Schaumkern mit den Tragschichten, vorzugsweise vollflächig, thermisch verschweißt, und/oder sind die Tragschichten mit den Außenschichten, vorzugsweise vollflächig, thermisch verschweißt. Dies ist bei der erfindungsgemäßen Schalungsplatte möglich, da alle Schichten einen Thermoplast umfassen. Durch thermisches Verschweißen können die Schichten der Schalungsplatte fest miteinander verbunden werden, woraus eine gute Stabilität resultiert. Darüber hinaus bietet das Verschweißen unter anderem kurze Prozesszeiten, einen hohen Wirkungsgrad beim Schweißen sowie konstante, reproduzierbare Schweißergebnisse.

Die Schalungsplatte ist bevorzugt in einem Rahmen lagerbar. Hierdurch kann die Steifigkeit erhöht werden, und/oder kann die Schalungsplatte mit einer oder mehreren benachbarten Schalungsplatten und/oder Bauwerksabschnitten verbunden werden.

Die Schalungsplatte weist vorzugsweise einen thermischen Längenausdehnungskoeffizienten in Richtung von Fasern der Tragschichten von 45 * 10⁻⁶ m/(mK) oder darunter auf, bevorzugter von 40 * 10⁻⁶ m/(mK) oder darunter, noch bevorzugter von 35 * 10⁻⁶ m/(mK) oder darunter. Aus dieser geringen Wärmeausdehnung der Schalungsplatte resultierte eine kleinere Differenz der thermischen Längenausdehnungskoeffizienten der Schalungsplatte und dem Rahmen. Folglich braucht nur eine vergleichsweise schmale Silikonfuge zwischen der Schalungsplatte und dem Rahmen vorgesehen zu werden, bzw. kann auf diese sogar gänzlich verzichtet werden. Das kann das Risiko von Hinausdrücken von Silikon aus den Fugen reduzieren, was in weiterer Folge zum Hineinfließen von Beton in eine dadurch entstehende Lücke und damit einhergehenden Abplatzungen führen könnte. Mit der erfindungsgemäßen Schalungsplatte kann folglich eine hochqualitative, homogene und ebene Betonoberfläche erhalten werden.

Die Außenschichten weisen bei Raumtemperatur (23 °C) vorzugsweise eine Charpy-Kerbschlagzähigkeit von 5 kJ/m² oder darüber auf, bevorzugter von 10 kJ/m² oder darüber, noch bevorzugter von 15 kJ/m² oder darüber, bevorzugt im Bereich von 10 bis 20 kJ/m², ermittelt vorzugsweise in Extrusionsrichtung. Hierdurch wird eine gute Nagelbarkeit erreicht, bei einer zugleich hohen Kratzfestigkeit und Steifigkeit der Außenschichten. Die Kerbschlagzähigkeit wird vorzugsweise nach der Norm DIN EN ISO 179 bestimmt, wobei Prüfkörper des Typs 1 und die Kerbform A mit einem Kerbgrundradius von 0,25 +/- 0,05 mm bei einer Restbreite des Prüfkörpers von 8,0 +/- 0,2 mm verwendet werden.

Die Schalungsplatte weist bei 24 °C vorzugsweise eine Schädigungsarbeit von 7 J/mm oder darüber auf, bevorzugter von 10 J/mm oder darüber, noch bevorzugter von 15 J/mm oder darüber. Die Schädigungsarbeit wird vorzugsweise mittels eines Durchstoßversuchs nach der Norm DIN EN ISO 6603-2 ermittelt, vorzugsweise unter Verwendung einer Probengeometrie von 60 x 60 x 19 mm³, einer Prüfgeschwindigkeit von 4,4 m/s, einem Stoßdorndurchmesser von 20 mm und einem ringförmigen Federteller als Einspannvorrichtung.

Vorzugsweise umfassen der Schaumkern, die Tragschichten und die Außenschichten der Schalungsplatte ein Polyolefin (d.h. auch der Thermoplast der Tragschichten umfasst ein Polyolefin). Polyolefine sind gut schweißbar, sodass insbesondere durch thermisches Verschweißen eine gute Festigkeit zwischen den Schichten der Schalungsplatte erhalten werden kann. Weiters weist die Schalungsplatte dann eine sehr gute Quellbeständigkeit auf.

Bevorzugt umfasst/umfassen der Schaumkern, die Tragschichten und/oder die Außenschichten ein Polypropylen oder eine Mischung aus zwei oder mehr Polypropylen-Typen (der Begriff Polypropylen umfasst dabei alle Polypropylen-Typen, darunter Polypropylen-Homopolymer, Polypropylen-Copolymere und Polypropylen-Terpolymere). Vorzugsweise enthält die Schalungsplatte eine Menge an Polypropylen von 90 Gew% oder darüber, bevorzugter von 95 Gew% oder darüber, noch bevorzugter von 99 Gew% oder darüber, besonders bevorzugt von 100 Gew%, bezogen auf das Gesamtgewicht des Kunststoffs in der Schalungsplatte. Diese Sortenreinheit vereinfacht ein nachfolgendes Recycling der Schalungsplatte maßgeblich. Die Schalungsplatte kann zerkleinert werden, um glasfaserverstärktes Polypropylen-Regranulat zu erhalten. Dieses kann vollständig nachfolgend wieder zur Herstellung von Schalungsplatten verwendet werden, bzw. kann es auch anderen Verwendungen zugeführt werden. Vorzugsweise sind zumindest 70 Gew% des Kunststoffs, insbesondere des Polypropylens, der Schalungsplatte recycliert, bevorzugter zumindest 80 Gew%, noch bevorzugter zumindest 90 Gew%, am bevorzugtesten 100 Gew%, bezogen auf das Gesamtgewicht des Kunststoffs in der Schalungsplatte. Durch die Kreislauffähigkeit der Schalungsplatte stellt diese daher einen wertvollen Beitrag zur Nachhaltigkeit dar.

Der Schaumkern umfasst ein Polyolefin. Hierbei handelt es sich vorzugsweise um ein geschlossenzellig geschäumtes Polyolefin. Aufgrund der geringen Wasseraufnahme des Polyolefins quillt der Schaumkern nicht, wenn er mit Feuchtigkeit oder Nässe in Berührung kommt (etwa bei Abplatzungen, die bis zum Schaumkern reichen). Somit kann ein Beton mit einer guten Oberflächenqualität erhalten werden. Der Schaumkern umfasst vorzugsweise kein Holz (z.B. Holzfasern, Holzstäbe), noch bevorzugter umfasst die komplette Schalungsplatte kein Holz, da dies mit einer Wasseraufnahme und Quellung einhergehen würde, was sich nachteilig auf die Oberflächenqualität des Betons auswirken könnte. Dann braucht auch keine zusätzliche Schicht an den Seitenflächen des Schaumkerns, die nicht mit den Tragschichten verbunden sind, vorgesehen zu werden, um den Schaumkern vor Feuchtigkeit bzw. Nässe zu schützen. Dies vereinfacht die Herstellung der Schalungsplatte maßgeblich. Auch wird dadurch die Lebensdauer der Schalungsplatte signifikant gesteigert, da es dann zu keiner Verrottung von Holz kommen kann.

Das Polyolefin des Schaumkerns ist vorzugsweise ein recyceltes Polyolefin. Dadurch kann die Nachhaltigkeit der Schalungsplatte verbessert werden. Das Polyolefin des Schaumkerns ist vorzugsweise ein Propylen oder eine Mischung aus zwei oder mehr Polypropylen-Typen. Dann kann der Schaumkern eine vergleichsweise hohe Steifigkeit aufweisen, sowie eine gute Scherfestigkeit. Bevorzugt umfasst das Polypropylen ein Polypropylen-Copolymer, noch bevorzugter ein Propylen-Ethylen-Copolymer, besonders bevorzugt ist das Polypropylen ein Propylen-Ethylen-Copolymer. Durch die Zugabe von Ethylen kann die Glasübergangstemperatur gegenüber einem Polypropylen-Homopolymer reduziert werden. Dadurch kann eine Versprödung bei Anwendungstemperaturen von unter 0 °C vermieden werden, und können die Tieftemperatureigenschaften der Schalungsplatte verbessert werden, insbesondere die dynamischen Eigenschaften (z.B. Schlagzähigkeit). Das Propylen-Ethylen-Copolymer weist vorzugsweise einen Ethylengehalt von 1 bis 15 Gew% auf, vorzugsweise von 2 bis 10 Gew%, bezogen auf das Gewicht des Propylen-Ethylen-Copolymers.

Das Polyolefin des Schaumkerns umfasst vorzugsweise einen Füllstoff. Hierdurch können die Eigenschaften des Schaumkerns maßgeschneidert werden. Der Füllstoff umfasst vorzugsweise ein Nukleierungsmittel und/oder einen verstärkenden Füllstoff. Umfasst der Füllstoff ein Nukleierungsmittel, kann dadurch ein geschäumtes Polyolefin mit einer gleichmäßigen, feinen Zellstruktur erhalten werden. Umfasst der Füllstoff einen verstärkenden Füllstoff, können die Festigkeit und/oder die Steifigkeit des Schaumkerns erhöht werden. Vorzugsweise umfasst der Füllstoff Talkum, noch bevorzugter ist der Füllstoff Talkum. Talkum kann sowohl als Nukleierungsmittel fungieren, um ein geschäumtes Polyolefin mit einer homogenen Zellstruktur zu erhalten, als auch als verstärkender Füllstoff wirken, um die Steifigkeit und somit die Stabilität des Schaumkerns zu erhöhen. Das Polyolefin umfasst den Füllstoff vorzugsweise in einer Menge von 1 bis 40 Gew%, bevorzugter von 5 bis 20 Gew%, noch bevorzugter von 5 bis 18 Gew%, noch bevorzugter von 5 bis 15 Gew%, bezogen auf das Gewicht des Polyolefins des Schaumkerns. Da die Tragschichten der erfindungsgemäßen Schalungsplatte bereits eine hohe Steifigkeit und Festigkeit aufweisen und somit eine gute Stabilität bereitstellen, ist der Einsatz einer im Vergleich zum Stand der Technik geringeren Menge an Füllstoff im Schaumkern ausreichend. Die hierdurch erzielte Gewichtseinsparung verbessert die Ressourceneffizienz. Vorzugsweise weist der Schaumkern eine Dichte von 50 bis 600 kg/m³ auf, bevorzugter von 150 bis 600 kg/m³, noch bevorzugter von 300 bis 500 kg/m³, noch bevorzugter von 400 bis 500 kg/m³. Aufgrund dieser geringen Dichte ist die Schalungsplatte bei ihrem Transport und ihrer Verwendung einfacher handhabbar.

Der Schaumkern ist vorzugsweise ein Integralschaumkern. Dieser weist eine geschäumte geschlossene Zellstruktur umgeben von kompakten Randschichten auf. Die Randschichten können als vollflächige Anbindungsfläche für die Tragschichten dienen, was die mechanische Belastbarkeit der miteinander verbundenen Schichten maßgeblich verbessert.

Die Tragschichten umfassen jeweils ein faserverstärktes, thermoplastisches Laminat, insbesondere bestehen die Tragschichten vorzugsweise jeweils aus dem faserverstärkten, thermoplastischen Laminat. Die erfindungsgemäßen Tragschichten stellen nicht nur eine hohe Festigkeit und Steifigkeit bereit, sondern auch eine geringe Wärmeausdehnung. Unter einem faserverstärkten, thermoplastischen Laminat wird eine Kombination aus einer thermoplastischen Matrix und Endlosfasern verstanden, wobei die Endlosfasern zumindest teilweise von der thermoplastischen Matrix umschlossen sind. Die Endlosfasern sind vorzugsweise in einer oder mehreren Verstärkungsfaserschicht(en) (z.B. Gewebe, Gelege, Gewirk, Gestrick, Geflecht, Vlies) enthalten.

Das faserverstärkte, thermoplastische Laminat ist vorzugsweise aus einem thermoplastischen, textilen Halbzeug hergestellt, wobei das thermoplastische, textile Halbzeug vorzugsweise ein Gewebe, ein Gewirk und/oder ein Gelege aufweist. Ein thermoplastisches, textiles Halbzeug umfasst eine Kombination aus einer thermoplastischen Matrix und Endlosfasern, wobei die Endlosfasern zumindest teilweise von der thermoplastischen Matrix umschlossen sind.

Bevorzugt weist das faserverstärkte, thermoplastische Laminat zwei bis zehn Verstärkungsfaserschichten auf, bevorzugter zwei bis acht, noch bevorzugter zwei bis sechs, noch bevorzugter drei bis fünf, am bevorzugtesten vier. Damit lässt sich eine gute Balance zwischen Flexibilität, Festigkeit und Steifigkeit erreichen.

Die Fasern des faserverstärkten, thermoplastischen Laminats sind vorzugsweise biaxial angeordnet, insbesondere mit einer Faserorientierung von 0/90°. Daraus kann eine besonders hohe Zugfestigkeit resultieren.

Das faserverstärkte, thermoplastische Laminat enthält vorzugsweise ein Gelege, ein Gewebe und/oder ein Gewirk, vorzugsweise wobei das Gelege, das Gewebe und/oder das Gewirk eine Faserorientierung von 0/90° haben. Die Verwendung eines Geleges ist besonders bevorzugt, weil Fasern darin gestreckt angeordnet sind, sodass ein Gelege eine vergleichsweise hohe Festigkeit aufweist, da eine Belastung direkt auf die Fasern wirken kann. Das Gelege ist vorzugsweise ein Biaxialgelege, bevorzugt mit einer Faserorientierung von 0/90°. Durch ein Gewebe kann eine hohe Stabilität und Steifigkeit erhalten werden, sowie eine gute Widerstandsfähigkeit gegenüber Rissen. Das Gewebe ist vorzugsweise ein Biaxialgewebe, vorzugsweise mit einer Faserorientierung von 0/90°. Dadurch kann das Laminat eine verbesserte Festigkeit aufweisen. Ein Gewirk wiederum kann die Elastizität des Laminats verbessern. Das faserverstärkte, thermoplastische Laminat weist vorzugsweise einen Faseranteil von 40 bis 80 Gew% auf, bevorzugter von 50 bis 70 Gew%, noch bevorzugter von 55 bis 65 Gew%, bezogen auf das Gesamtgewicht des faserverstärkten, thermoplastischen Laminats. Dadurch wird eine gute Balance zwischen Festigkeit und Flexibilität des Laminats erreicht.

Bevorzugt umfasst das faserverstärkte, thermoplastische Laminat Glasfasern. Diese weisen gute dielektrische Eigenschaften auf und können gut an die thermoplastische Matrix des Laminats angekoppelt werden; die Ankopplung kann durch den Einsatz einer geeigneten, insbesondere thermoplast-kompatiblen, Schlichte weiter verbessert werden. Weiters sind Glasfasern preislich attraktiv und weisen eine gute Zugfestigkeit, Druckfestigkeit und Schlagzähigkeit auf. Die Glasfasern sind vorzugsweise S-Glasfasern (Strength-Glasfasern). S-Glasfasern umfassen Aluminiumsilikat-Glas und Magnesiumoxid, sie weisen bei erhöhter Temperatur eine vergleichsweise hohe Festigkeit auf.

Das faserverstärkte, thermoplastische Laminat umfasst vorzugsweise ein Polyolefin. Da der Schaumkern und die Außenschichten auch ein Polyolefin umfassen, kann die Schalungsplatte dann möglichst reinsortig sein. Polyolefine sind beständig gegen Nässe bzw. Feuchtigkeit, sodass die Tragschichten beim Einsatz der Schalungsplatte nicht quellen, und weisen weiters eine gute Kompatibilität zu Fasern, insbesondere Glasfasern, auf. Das Polyolefin ist vorzugsweise ein recyceltes Polyolefin. Dadurch kann die Nachhaltigkeit der Schalungsplatte verbessert werden. Das Polyolefin ist vorzugsweise ein Polypropylen oder eine Mischung aus zwei oder mehr Polypropylen-Typen. Polypropylen ist gut schweißbar, sodass die Tragschichten durch thermisches Verschweißen fest mit dem Schaumkern und den Außenschichten verbunden werden können. Auch ist eine gute Ankopplung der Fasern des Laminats an die Polypropylen-Matrix möglich. Weiters kann durch den Einsatz von Polypropylen eine gute Balance zwischen Festigkeit und Flexibilität der Tragschichten erreicht werden. Besonders bevorzugt ist das Polyolefin ein Polypropylen-Homopolymer, da dieses eine vergleichsweise hohe Steifigkeit und Festigkeit aufweist.

Bevorzugt weisen die Tragschichten jeweils ein Flächengewicht im Bereich von 1000 bis 2200 g/m² auf, bevorzugter von 1200 bis 2000 g/m², noch bevorzugter von 1400 bis 1700 g/m², besonders bevorzugt von 1450 bis 1650 g/m². Dies trägt zu einer hohen Stabilität der Schalungsplatte bei gleichzeitig einfacher Handhabung bei.

Die Außenschichten umfassen jeweils ein faserverstärktes Polyolefin. Das Polyolefin stellt eine gute Beständigkeit gegenüber Nässe bzw. Feuchtigkeit bereit. Durch die Faserverstärkung wird die Steifigkeit der Außenschichten erhöht, was die Nagelbarkeit und Kratzfestigkeit verbessert. Die Außenschichten tragen folglich maßgeblich dazu bei, mithilfe der Schalungsplatte glatte und homogene Betonoberflächen herzustellen. Die Außenschichten sind weiter außen angeordnet als die Tragschichten. Die Schalungsplatte kann noch eine oder mehrere weitere Schichten aufweisen (z.B. eine Deckschicht), die weiter außen angeordnet sind als die Außenschichten.

Das faserverstärkte Polyolefin wird vorzugsweise durch Coextrusion von Fasern mit einem Polyolefin erhalten. Dadurch können die Fasern gleichmäßig in der Polyolefin-Matrix verteilt werden. Vorzugsweise umfasst das Polyolefin der Außenschichten ein recyceltes Polyolefin. Dies verbessert die Nachhaltigkeit der Schalungsplatte. Das Polyolefin der Außenschichten ist vorzugsweise ein Polypropylen oder eine Mischung aus zwei oder mehr Polypropylen-Typen. Durch den Einsatz von Polypropylen kann eine gute Balance zwischen Festigkeit und Flexibilität der Außenschichten erreicht werden. Vorzugsweise ist das Polyolefin ein Polypropylen-Homopolymer, da dieses eine vergleichsweise hohe Steifigkeit und Festigkeit aufweist.

Das faserverstärkte Polyolefin weist vorzugsweise einen Fasergehalt von 20 bis 60 Gew% auf, bevorzugter von 30 bis 55 Gew%, noch bevorzugter von 35 bis 45 Gew%, bezogen auf das Gesamtgewicht des faserverstärkten Polyolefins. Dadurch wird eine gute Balance zwischen Schlagzähigkeit und Festigkeit erreicht. Die Fasern des faserverstärkten Polyolefins weisen vorzugsweise eine Länge von 2 bis 6 mm auf, bevorzugter von 3 bis 5 mm. Dies ermöglicht es, Außenschichten mit einer hohen Steifigkeit, Festigkeit und Schlagzähigkeit zu erhalten, bei zugleich guter Verarbeitbarkeit. Die Fasern des faserverstärkten Polyolefins sind vorzugsweise Glasfasern. Diese sind nicht nur preislich attraktiv, sondern weisen auch eine gute Zugfestigkeit, Druckfestigkeit und Schlagzähigkeit auf. Weiters haben sie gute dielektrische Eigenschaften und können gut an das Polyolefin angekoppelt werden; die Ankopplung kann durch den Einsatz einer geeigneten, insbesondere thermoplast-kompatiblen, Schlichte weiter verbessert werden.

Die Außenschichten umfassen vorzugsweise einen UV-Stabilisator. Hierdurch kann die Witterungsbeständigkeit, insbesondere UV-Beständigkeit, verbessert werden.

Vorzugsweise weist die Schalungsplatte mit den Außenschichten verbundene Deckschichten auf. Diese enthalten bevorzugt Farbpigmente. Dadurch kann der Schalungsplatte eine bestimmte Farbe verliehen werden. Die Deckschichten können bedruckt sein. Hierdurch kann die Schalungsplatte mit einem bestimmten Aufdruck, etwa zur Kennzeichnung, versehen werden.

Offenbart wird weiters ein Verfahren zur Herstellung der erfindungsgemäßen Schalungsplatte, umfassend die Schritte
(a) Herstellen des Schaumkerns, und
(b) beidseitiges Verbinden des Schaumkerns mit thermoplastischen, textilen Halbzeugen, und Verbinden der thermoplastischen, textilen Halbzeuge mit den Außenschichten.

Das Herstellen des Schaumkerns in Schritt (a) erfolgt vorzugsweise in einem Hochdruckverfahren, besonders bevorzugt mittels Spritzgießen. Hierdurch ist die Herstellung eines Integralschaumkerns möglich, dessen Randschichten als vollflächige Anbindungsfläche für die thermoplastischen, textilen Halbzeuge dienen können. Im Spritzgießverfahren können der Dichteverlauf und/oder die Stärke der Randschichten durch einer Fachperson bekannte Parametervariation eingestellt werden.

In Schritt (b) werden der Schaumkern und die thermoplastischen, textilen Halbzeuge vorzugsweise thermisch verschweißt, und/oder werden die thermoplastischen, textilen Halbzeuge mit den Außenschichten vorzugsweise thermisch verschweißt. Durch thermisches Verschweißen können die Schichten der Schalungsplatte fest miteinander verbunden werden, woraus eine gute Stabilität resultiert. Darüber hinaus bietet das Verschweißen unter anderem kurze Prozesszeiten, einen hohen Wirkungsgrad beim Schweißen sowie konstante, reproduzierbare Schweißergebnisse. Die beim thermischen Verschweißen verwendete Temperatur kann an die konkret verwendeten Kunststoffe angepasst werden, diese Anpassung kann von einer Fachperson einfach vorgenommen werden.

Vorzugsweise werden der Schaumkern und die thermoplastischen, textilen Halbzeuge und/oder die thermoplastischen, textilen Halbzeuge und die Außenschichten nach dem Verbinden, insbesondere nach dem thermischen Verschweißen, verdichtet. Hierdurch kann der Kontakt zwischen den Schichten verbessert werden. Insbesondere kann sich der Kontakt über die gesamte Oberfläche der jeweiligen Schichten ausbilden, was die mechanische Belastbarkeit der Schalungsplatte verbessern kann. Der Druck und/oder die Temperatur beim Verdichten können an die konkret verwendeten Werkstoffe angepasst werden und sind einer Fachperson geläufig.

Offenbart wird auch die Verwendung der Schalungsplatte gemäß der Erfindung zur Herstellung eines Betonelements.

Die Erfindung betrifft weiters ein Rahmenschalungselement, aufweisend einen Rahmen und eine Schalungsplatte gemäß der Erfindung. Durch Lagerung der Schalungsplatte im Rahmen kann ihre Steifigkeit erhöht werden, und/oder kann die Schalungsplatte mit einer oder mehreren benachbarten Schalungsplatten und/oder Bauwerksabschnitten verbunden werden.

Der Rahmen kann aus Metall sein, insbesondere aus Aluminium oder aus Stahl. Dann kann er eine hohe Steifigkeit und Festigkeit bereitstellen. Der Rahmen kann durch ein umlaufendes Profil gebildet sein. Beispielsweise kann der Rahmen vier Seitenteile aufweisen, nämlich zwei Längsseitenteile an den Längsseiten der Schalungsplatte und zwei Querseitenteile an den Quer- bzw. Schmalseiten der Schalungsplatte. Der Rahmen kann eine Längs- und/oder eine Querversteifung zwischen den Längs- und/oder Querseitenteilen des Rahmens aufweisen. Hierdurch kann die Steifigkeit des Rahmenschalungselements weiter erhöht werden. Die Schalungsplatte kann fest (d.h. bestimmungsgemäß nicht zerlegbar) oder reversibel lösbar mit dem Rahmen verbunden sein.

Die Erfindung betrifft insbesondere die folgenden Ausführungsformen:
1. Schalungsplatte, insbesondere zur Herstellung eines Betonelements, aufweisend:
   einen Schaumkern umfassend ein Polyolefin,
   beidseitig mit dem Schaumkern verbundene Tragschichten umfassend jeweils ein faserverstärktes, thermoplastisches Laminat, und
   mit den Tragschichten verbundene Außenschichten umfassend jeweils ein faserverstärktes Polyolefin.
2. Schalungsplatte nach Ausführungsform 1, wobei die Schalungsplatte eine Dicke von 10 bis 35 mm aufweist, vorzugsweise 12 bis 30 mm, bevorzugter 15 bis 25 mm.
3. Schalungsplatte nach Ausführungsform 1 oder 2, wobei der Schaumkern 60 bis 95% der Dicke der Schalungsplatte aufweist, vorzugsweise 75 bis 90%, bevorzugter 75 bis 85%.
4. Schalungsplatte nach einer der Ausführungsformen 1 bis 3, wobei die Tragschichten jeweils 2 bis 8% der Dicke des Schalungsplatte aufweisen, vorzugsweise 3 bis 8%, bevorzugter 4 bis 7%.
5. Schalungsplatte nach einer der Ausführungsformen 1 bis 4, wobei die Außenschichten jeweils 2 bis 8% der Dicke des Schalungsplatte aufweisen, vorzugsweise 2 bis 6%, bevorzugter 3,5 bis 5,5%.
6. Schalungsplatte nach einer der Ausführungsformen 1 bis 5, wobei der Schaumkern und die Tragschichten und/oder die Tragschichten und die Außenschichten klebstofffrei miteinander verbunden sind.
7. Schalungsplatte nach einer der Ausführungsformen 1 bis 6, wobei die Tragschichten direkt an den Schaumkern angrenzen, und/oder wobei die Außenschichten direkt an die Tragschichten angrenzen.
8. Schalungsplatte nach Ausführungsform 7, wobei der Schaumkern mit den Tragschichten thermisch verschweißt ist, und/oder wobei die Tragschichten mit den Außenschichten thermisch verschweißt sind, vorzugsweise wobei der Schaumkern mit den Tragschichten vollflächig thermisch verschweißt ist, und/oder wobei die Tragschichten mit den Außenschichten vollflächig thermisch verschweißt sind.
9. Schalungsplatte nach einer der Ausführungsformen 1 bis 8, wobei die Schalungsplatte in einem Rahmen lagerbar ist.
10. Schalungsplatte nach einer der Ausführungsformen 1 bis 9, aufweisend einen thermischen Längenausdehnungskoeffizienten in Richtung von Fasern der Tragschichten von 45 * 10⁻⁶ m/(mK) oder darunter, vorzugsweise von 40 * 10⁻⁶ m/(mK) oder darunter, bevorzugter von 35 * 10⁻⁶ m/(mK) oder darunter.
11. Schalungsplatte nach einer der Ausführungsformen 1 bis 10, wobei die Außenschichten bei 23 °C eine Charpy-Kerbschlagzähigkeit von 5 kJ/m² oder darüber aufweisen, vorzugsweise von 10 kJ/m² oder darüber, noch bevorzugter von 15 kJ/m² oder darüber, bevorzugt im Bereich von 10 bis 20 kJ/m², ermittelt vorzugsweise in Extrusionsrichtung, vorzugsweise ermittelt nach der Norm DIN EN ISO 179.
12. Schalungsplatte nach einer der Ausführungsformen 1 bis 11, aufweisend eine Schädigungsarbeit bei 24 °C von 7 J/mm oder darüber, bevorzugter von 10 J/mm oder darüber, noch bevorzugter von 15 J/mm oder darüber, vorzugsweise ermittelt nach der Norm DIN EN ISO 6603-2.
13. Schalungsplatte nach einer der Ausführungsformen 1 bis 12, wobei der Schaumkern, die Tragschichten und die Außenschichten ein Polyolefin umfassen.
14. Schalungsplatte nach einer der Ausführungsformen 1 bis 13, wobei der Schaumkern ein geschlossenzellig geschäumtes Polyolefin umfasst.
15. Schalungsplatte nach Ausführungsform 14, wobei der Schaumkern, die Tragschichten und/oder die Außenschichten ein Polypropylen oder eine Mischung aus zwei oder mehr Polypropylen-Typen umfasst/umfassen.
16. Schalungsplatte nach Ausführungsform 15, wobei die Schalungsplatte eine Menge an Polypropylen von 90 Gew% oder darüber enthält, bevorzugter von 95 Gew% oder darüber, noch bevorzugter von 99 Gew% oder darüber, besonders bevorzugt von 100 Gew%, bezogen auf das Gesamtgewicht des Kunststoffs in der Schalungsplatte.
17. Schalungsplatte nach einer der Ausführungsformen 1 bis 16, wobei zumindest 70 Gew% des Kunststoffs der Schalungsplatte recycliert sind, bevorzugter zumindest 80 Gew%, noch bevorzugter zumindest 90 Gew%, noch bevorzugter zumindest 95 Gew%, noch bevorzugter zumindest 99 Gew%, am bevorzugtesten 100 Gew%, bezogen auf das Gesamtgewicht des Kunststoffs in der Schalungsplatte.
18. Schalungsplatte nach einer der Ausführungsformen 1 bis 17, wobei das Polyolefin des Schaumkerns ein recyceltes Polyolefin ist.
19. Schalungsplatte nach einer der Ausführungsformen 1 bis 18, wobei das Polyolefin des Schaumkerns ein Polypropylen oder eine Mischung aus zwei oder mehr Polypropylen-Typen ist.
20. Schalungsplatte nach Ausführungsform 19, wobei das Polypropylen des Schaumkerns ein Polypropylen-Copolymer umfasst, vorzugsweise ein Propylen-Ethylen-Copolymer, wobei das Polypropylen besonders bevorzugt ein Propylen-Ethylen-Copolymer ist.
21. Schalungsplatte nach Ausführungsform 20, wobei das Propylen-Ethylen-Copolymer einen Ethylengehalt von 1 bis 15 Gew% aufweist, vorzugsweise von 2 bis 10 Gew%, bezogen auf das Gewicht des Propylen-Ethylen-Copolymers.
22. Schalungsplatte nach einer der Ausführungsformen 1 bis 21, wobei das Polyolefin des Schaumkerns einen Füllstoff umfasst.
23. Schalungsplatte nach Ausführungsform 22, wobei der Füllstoff ein Nukleierungsmittel und/oder einen verstärkenden Füllstoff umfasst.
24. Schalungsplatte nach Ausführungsform 22 oder 23, wobei der Füllstoff Talkum umfasst, vorzugsweise wobei der Füllstoff Talkum ist.
25. Schalungsplatte nach einer der Ausführungsformen 22 bis 24, wobei das Polyolefin den Füllstoff in einer Menge von 1 bis 40 Gew% umfasst, vorzugsweise von 5 bis 20 Gew%, bevorzugter von 5 bis 18 Gew%, noch bevorzugter von 5 bis 15 Gew%, bezogen auf das Gewicht des Polyolefins des Schaumkerns.
26. Schalungsplatte nach einer der Ausführungsformen 1 bis 25, wobei der Schaumkern eine Dichte von 50 bis 600 kg/m³ aufweist, vorzugsweise von 150 bis 600 kg/m³, bevorzugter von 300 bis 500 kg/m³, noch bevorzugter von 400 bis 500 kg/m³.
27. Schalungsplatte nach einer der Ausführungsformen 1 bis 26, wobei der Schaumkern ein Integralschaumkern ist.
28. Schalungsplatte nach einer der Ausführungsformen 1 bis 27, wobei das faserverstärkte, thermoplastische Laminat aus einem thermoplastischen, textilen Halbzeug hergestellt ist, wobei das thermoplastische, textile Halbzeug vorzugsweise ein Gewebe, ein Gewirk und/oder ein Gelege aufweist.
29. Schalungsplatte nach einer der Ausführungsformen 1 bis 28, wobei das faserverstärkte, thermoplastische Laminat zwei bis zehn Verstärkungsfaserschichten aufweist, bevorzugter zwei bis acht, noch bevorzugter zwei bis sechs, noch bevorzugter drei bis fünf, am bevorzugtesten vier; und/oder wobei die Fasern des faserverstärkten, thermoplastischen Laminats eine Faserorientierung von 0/90° haben.
30. Schalungsplatte nach einer der Ausführungsformen 1 bis 29, wobei das faserverstärkte, thermoplastische Laminat ein Gelege, ein Gewebe und/oder ein Gewirk enthält, vorzugsweise wobei das Gelege, das Gewebe und/oder das Gewirk eine Faserorientierung von 0/90° haben.
31. Schalungsplatte nach Ausführungsform 30, wobei das faserverstärkte, thermoplastische Laminat ein Gelege enthält, vorzugsweise ein Biaxialgelege, bevorzugter ein Gelege mit einer Faserorientierung von 0/90°.
32. Schalungsplatte nach einer der Ausführungsformen 1 bis 31, wobei das faserverstärkte, thermoplastische Laminat einen Faseranteil von 40 bis 80 Gew% aufweist, vorzugsweise von 50 bis 70 Gew%, bevorzugter von 55 bis 65 Gew%, bezogen auf das Gesamtgewicht des faserverstärkten, thermoplastischen Laminats.
33. Schalungsplatte nach einer der Ausführungsformen 1 bis 32, wobei das faserverstärkte, thermoplastische Laminat Glasfasern umfasst, vorzugsweise wobei die Glasfasern S-Glasfasern sind.
34. Schalungsplatte nach einer der Ausführungsformen 1 bis 33, wobei das faserverstärkte, thermoplastische Laminat ein Polyolefin umfasst, vorzugsweise ein recyceltes Polyolefin.
35. Schalungsplatte nach Ausführungsform 34, wobei das Polyolefin des Laminats ein Polypropylen oder eine Mischung aus zwei oder mehr Polypropylen-Typen ist.
36. Schalungsplatte nach Ausführungsform 35, wobei das Polyolefin des Laminats ein Polypropylen-Homopolymer ist.
37. Schalungsplatte nach einer der Ausführungsformen 1 bis 36, wobei die Tragschichten jeweils ein Flächengewicht im Bereich von 1000 bis 2200 g/m² aufweisen, vorzugsweise von 1200 bis 2000 g/m², bevorzugter von 1400 bis 1700 g/m², noch bevorzugter von 1450 bis 1650 g/m².
38. Schalungsplatte nach einer der Ausführungsformen 1 bis 37, wobei das faserverstärkte Polyolefin durch Coextrusion von Fasern mit einem Polyolefin erhältlich ist.
39. Schalungsplatte nach einer der Ausführungsformen 1 bis 38, wobei das Polyolefin der Außenschichten ein recyceltes Polyolefin umfasst.
40. Schalungsplatte nach Ausführungsform 39, wobei das Polyolefin der Außenschichten ein Polypropylen oder eine Mischung aus zwei oder mehr Polypropylen-Typen ist, vorzugsweise ein Polypropylen-Homopolymer.
41. Schalungsplatte nach einer der Ausführungsformen 1 bis 40, wobei das faserverstärkte Polyolefin der Außenschichten einen Fasergehalt von 20 bis 60 Gew% aufweist, vorzugsweise von 30 bis 55 Gew%, bevorzugter von 35 bis 45 Gew%, bezogen auf das Gesamtgewicht des faserverstärkten Polyolefins.
42. Schalungsplatte nach einer der Ausführungsformen 1 bis 41, wobei die Fasern des faserverstärkten Polyolefins eine Länge von 2 bis 6 mm aufweisen, bevorzugter von 3 bis 5 mm.
43. Schalungsplatte nach einer der Ausführungsformen 1 bis 42, wobei die Fasern des faserverstärkten Polyolefins Glasfasern sind.
44. Schalungsplatte nach einer der Ausführungsformen 1 bis 43, wobei die Außenschichten einen UV-Stabilisator umfassen.
45. Schalungsplatte nach einer der Ausführungsformen 1 bis 44, weiters aufweisend mit den Außenschichten verbundene Deckschichten.
46. Schalungsplatte nach Ausführungsform 45, wobei die Deckschichten Farbpigmente umfassen.
47. Schalungsplatte nach Ausführungsform 45 oder 46, wobei die Deckschichten bedruckt sind.
48. Verfahren zur Herstellung der Schalungsplatte nach einer der Ausführungsformen 1 bis 47, umfassend die Schritte
   (a) Herstellen des Schaumkerns, und
   (b) beidseitiges Verbinden des Schaumkerns mit thermoplastischen, textilen Halbzeugen, und Verbinden der thermoplastischen, textilen Halbzeuge mit den Außenschichten.
49. Verfahren nach Ausführungsform 48, wobei das Herstellen des Schaumkerns mittels Spritzgießen erfolgt.
50. Verfahren nach Ausführungsform 48 oder 49, wobei der Schaumkern und die thermoplastischen, textilen Halbzeuge thermisch verschweißt werden, und/oder wobei die thermoplastischen, textilen Halbzeuge mit den Außenschichten thermisch verschweißt werden.
51. Verfahren nach einer der Ausführungsformen 48 bis 50, wobei der Schaumkern und die thermoplastischen, textilen Halbzeuge und/oder die thermoplastischen, textilen Halbzeuge und die Außenschichten nach dem Verbinden verdichtet werden.
52. Verwendung der Schalungsplatte nach einer der Ausführungsformen 1 bis 47 zur Herstellung eines Betonelements.
53. Rahmenschalungselement, aufweisend:
   einen Rahmen und
   eine Schalungsplatte nach einer der Ausführungsformen 1 bis 47.

Die Erfindung wird nachstehend mittels Figurenbeschreibungen von Ausführungsformen weiter erläutert. Diese Ausführungsformen sind bevorzugte Ausführungsformen, auf welche die Erfindung jedoch nicht beschränkt sein soll.
Fig. 1 zeigt einen Schaumkern, Tragschichten und Außenschichten zur Herstellung einer Schalungsplatte.
Fig. 2 zeigt ein Rahmenschalungselement mit einem Rahmen und einer darin eingesetzten Schalungsplatte gemäß Fig. 1.

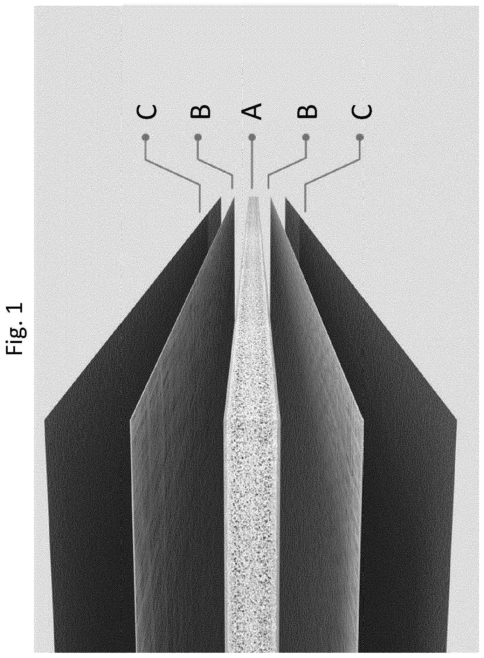

In Fig. 1 ist ein Schichtaufbau für eine Schalungsplatte gezeigt. Dargestellt sind ein Schaumkern (A), Tragschichten (B) und Außenschichten (C), die mittels thermischen Verschweißens verbunden werden können. Hierdurch kann eine Schalungsplatte mit dem Schichtaufbau C/B/A/B/C und einer Dicke von 19 mm erhalten werden, wobei der Schaumkern (A) eine Dicke von 15,2 mm aufweist und die Außenschichten jeweils eine Dicke von 0,85 mm. Der Schaumkern (A) ist ein Integralschaumkern mit einer Dichte von 470 kg/m³ und umfasst ein recyceltes Propylen-Ethylen-Copolymer sowie 15 Gew% Talkum (bezogen auf das Gewicht des Propylen-Ethylen-Copolymers). Die Tragschichten (B) haben ein Flächengewicht von 1500 g/m² und umfassen jeweils ein mit S-Glasfasern verstärktes, thermoplastisches Laminat mit einem Faseranteil von 60 Gew%. Das Laminat ist ein 0/90°-Gewebe mit vier übereinanderliegenden Verstärkungsfaserschichten. Der Thermoplast des Laminats ist ein recyceltes Polypropylen-Homopolymer. Die Außenschichten (C) umfassen jeweils ein mit 40 Gew% Glasfasern verstärktes, recyceltes Polypropylen-Homopolymer, das durch Coextrusion erhalten wurde.

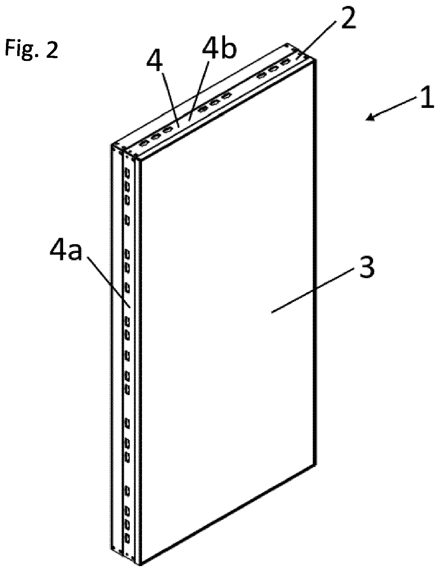

Fig. 2 zeigt ein Rahmenschalungselement 1 mit einem metallischen Rahmen 2 und einer darin eingesetzten Schalungsplatte 3 gemäß Fig. 1. Der Rahmen 2 ist durch ein umlaufendes Profil gebildet und weist vier Seitenteile 4 auf, nämlich zwei Längsseitenteile 4a an den Längsseiten der Schalungsplatte 3 und zwei Querseitenteile 4b an den Quer- bzw. Schmalseiten der Schalungsplatte 3.

## Patentansprüche

1. Schalungsplatte (3), aufweisend:
einen Schaumkern (A) umfassend ein Polyolefin,
beidseitig mit dem Schaumkern (A) verbundene Tragschichten (B) umfassend jeweils ein faserverstärktes, thermoplastisches Laminat, und
mit den Tragschichten (B) verbundene Außenschichten (C) umfassend jeweils ein faserverstärktes Polyolefin.

2. Schalungsplatte (3) nach Anspruch 1, wobei der Schaumkern (A) mit den Tragschichten (B) thermisch verschweißt ist, und/oder wobei die Tragschichten (B) mit den Außenschichten (C) thermisch verschweißt sind.

3. Schalungsplatte (3) nach Anspruch 1 oder 2, aufweisend einen thermischen Längenausdehnungskoeffizienten in Richtung von Fasern der Tragschichten (B) von 35 * 10⁻⁶ m/(mK) oder darunter.

4. Schalungsplatte (3) nach einem der Ansprüche 1 bis 3, wobei die Außenschichten (C) bei 23 °C eine Charpy-Kerbschlagzähigkeit von 10 kJ/m² oder darüber aufweisen, ermittelt nach der Norm DIN EN ISO 179.

5. Schalungsplatte (3) nach einem der Ansprüche 1 bis 4, wobei der Schaumkern (A), die Tragschichten (B) und/oder die Außenschichten (C) ein Polypropylen umfassen.

6. Schalungsplatte (3) nach einem der Ansprüche 1 bis 5, wobei zumindest 95 Gew% des Kunststoffs der Schalungsplatte recycliert sind, bezogen auf das Gesamtgewicht des Kunststoffs in der Schalungsplatte.

7. Schalungsplatte (3) nach einem der Ansprüche 1 bis 6, wobei das Polyolefin des Schaumkerns (A) Talkum umfasst.

8. Schalungsplatte (3) nach Anspruch 7, wobei das Polyolefin das Talkum in einer Menge von 5 bis 20 Gew% umfasst, bezogen auf das Gewicht des Polyolefins des Schaumkerns (A).

9. Schalungsplatte (3) nach einem der Ansprüche 1 bis 8, wobei das Polyolefin des Schaumkerns (A) ein Propylen-Ethylen-Copolymer ist.

10. Schalungsplatte (3) nach einem der Ansprüche 1 bis 9, aufweisend eine Schädigungsarbeit bei 24 °C von 10 J/mm oder darüber, ermittelt nach der Norm DIN EN ISO 6603-2.

11. Schalungsplatte (3) nach einem der Ansprüche 1 bis 10, wobei Fasern des faserverstärkten, thermoplastischen Laminats eine Faserorientierung von 0/90° haben.

12. Schalungsplatte (3) nach einem der Ansprüche 1 bis 11, wobei das faserverstärkte, thermoplastische Laminat einen Faseranteil von 55 bis 65 Gew% aufweist, bezogen auf das Gesamtgewicht des faserverstärkten, thermoplastischen Laminats.

13. Schalungsplatte (3) nach einem der Ansprüche 1 bis 12, wobei das faserverstärkte Polyolefin der Außenschichten (C) einen Fasergehalt von 35 bis 45 Gew% aufweist, bezogen auf das Gesamtgewicht des faserverstärkten Polyolefins.

14. Schalungsplatte (3) nach einem der Ansprüche 1 bis 13, wobei der Schaumkern (A) ein Integralschaumkern ist.

15. Rahmenschalungselement (1), aufweisend:
einen Rahmen (2) und
eine Schalungsplatte (3) nach einem der Ansprüche 1 bis 14.
